# FASCICULE DE BREVET EUROPEEN

(11) **EP 2 845 246 B1**
(45) Date de publication et mention de la délivrance du brevet: **28.09.2016**
(21) Numéro de dépôt: 13722328.5
(22) Date de dépôt: 30.04.2013
(51) Int. Cl.: H01M 2/10, H01M 10/653, H01M 10/643, H01M 10/613, H01M 10/6554, H01G 11/08, H01G 11/14, H01G 11/82, H01M 10/6551

(54) **MODULE DE STOCKAGE D'ÉNERGIE COMPRENANT DES MOYENS DE CALAGE DÉPLAÇABLES D'UNE PLURALITÉ D'ÉLÉMENTS DE STOCKAGE D'ÉNERGIE**
ENERGIESPEICHERMODUL MIT BEWEGLICHER VORRICHTUNG ZUM EINSTELLEN MEHRERER ENERGIESPEICHERELEMENTE
POWER STORAGE MODULE INCLUDING MOVABLE MEANS FOR SETTING A PLURALITY OF POWER STORAGE ELEMENTS

(30) Priorité: 30.04.2012 FR 1253980
(43) Date de publication de la demande: 11.03.2015
(73) Titulaire: Blue Solutions, 29500 Ergué Gabéric (FR)
(72) Inventeur: JUVENTIN, Anne-Claire, F-29000 Quimper (FR); LE GALL, Laurent, F-29500 Ergue Gaberic (FR)
(74) Mandataire: Regimbeau
(86) Numéro de dépôt international: PCT/EP2013/058970
(87) Numéro de publication internationale: WO 2013/164335

(56) Documents cités:
- EP-A1- 0 989 618
- DE-A1-102007 063 186
- US-A1- 2011 183 177

## Description

La présente invention a pour objet un module de stockage d'énergie comprenant une pluralité d'éléments de stockage d'énergie.

De tels éléments de stockage d'énergie peuvent constituer un condensateur, une batterie, une supercapacité, etc. Chacun de ces éléments comprend généralement un coeur électrochimique stockant l'énergie et comprenant au moins une électrode positive et une électrode négative, et un boîtier externe rigide protégeant mécaniquement le coeur électrochimique. Le coeur électrochimique est relié au boîtier de sorte qu'une borne positive et une borne négative de l'élément de stockage sont accessibles depuis l'extérieur de celui-ci.

Un module est un ensemble comprenant une pluralité d'éléments de stockage d'énergie disposés côte à côte et reliés électriquement, généralement en série. Il permet de fournir en un seul bloc des ensembles d'éléments de stockage d'énergie supportant une tension plus importante et fournissant une capacité de stockage plus importante que des éléments unitaires. En plus de contenir les éléments de stockage, il comprend généralement de nombreux éléments fonctionnels (isolation électrique, conduction thermique, équilibrage de la charge des éléments de stockage, etc.) qui permettent d'assurer un bon fonctionnement du module.

On connaît déjà dans l'état de la technique un module de stockage d'énergie comprenant une pluralité d'éléments de stockage d'énergie disposés côte à côte. Ce module comprenant une enveloppe externe parallélépipédique constituée de six parois indépendantes fixées les unes aux autres lors de l'assemblage du module. Il comprend également un tapis de conduction thermique sur lequel sont posés les éléments de stockage, un tel tapis permettant de conduire la chaleur depuis les éléments vers l'extérieur du module. Une des parois, notamment la paroi inférieure du module peut également comprendre des ailettes de refroidissement pour permettre une meilleure évacuation de la chaleur vers l'extérieur du module.

Un tel module est satisfaisant pour la plupart des applications. Toutefois, pour certaines applications on cherche toujours à augmenter la capacité volumique du module. Or, l'augmentation de la capacité volumique induit l'augmentation de la chaleur produite, et peut entraîner une mauvaise évacuation de la chaleur ou, pour remédier à cet inconvénient, une augmentation du volume consacré aux ailettes d'évacuation de la chaleur qui ne permet pas d'augmenter de façon significative la capacité volumique du module.

Pour remédier aux inconvénients précités, l'invention a pour objet un module de stockage d'énergie apte à contenir une pluralité d'éléments de stockage d'énergie, le module comprenant :
- une enveloppe comprenant au moins une pluralité de parois latérales et deux parois d'extrémité, les parois latérales étant réalisées en une seule pièce présentant un contour fermé et dimensionnée pour entourer les éléments de stockage d'énergie,
- une paroi de maintien des éléments de stockage d'énergie distincte des parois de l'enveloppe, et destinée à s'étendre essentiellement parallèlement à l'une des parois latérales, dite paroi de référence,
des moyens aptes à modifier la position de la paroi de maintien, entre au moins une position d'assemblage, dans laquelle elle se trouve à une première distance de la paroi de référence, et une position de fonctionnement, dans laquelle elle se trouve à une deuxième distance de la paroi de référence, supérieure à la première distance. les moyens pour modifier la position de la paroi de maintien comprenant au moins une cale destinée à être insérée entre la paroi de référence et la paroi de maintien, la cale présentant notamment la forme d'un longeron, la paroi dé référence comprenant au moins un rail de guidage apte à coopérer avec le ou au moins l'une des cales.
On entend, dans le cadre de la présente invention par « paroi de maintien », une plaque pleine, ou une plaque percée composée par exemple de quatre segments assemblés en quadrilatère et constituant un cadre, chaque segment étant destiné à venir en contact avec un ou plusieurs éléments de stockage.

L'enveloppe comprenant plusieurs parois d'un seul tenant permet en effet une meilleure circulation de la chaleur au sein de l'enveloppe que dans l'état de la technique puisqu'il n'y a pas de discontinuité de matière entre deux parois adjacentes. La chaleur est alors mieux répartie entre les différentes parois de l'enveloppe et la surface d'échange de l'enveloppe avec l'air est plus importante. On peut donc facilement augmenter la chaleur évacuée au niveau de l'enveloppe sans ajouter d'ailettes sur celle-ci. On notera toutefois que l'invention n'exclut pas la protection d'un module tel que défini ci-dessus et dont l'enveloppe est munie d'ailettes. Ces ailettes ne sont simplement pas nécessaires du fait de la configuration de l'enveloppe.

Le montage constitué de la paroi de maintien et des moyens pour modifier la position de celle-ci permet de glisser facilement les éléments dans l'enveloppe, lorsque la paroi de maintien est en position d'assemblage, tout en plaquant ces éléments contre une paroi de l'enveloppe pour permettre une aussi bonne évacuation de la chaleur depuis les éléments vers l'enveloppe du module, lorsque celle-ci est en position de fonctionnement. Evidemment, un tapis peut être interposé entre l'enveloppe et les éléments de stockage.

En effet, lors de l'insertion des éléments dans l'enveloppe, la paroi de maintien est placée dans la position d'assemblage, et il n'y a pas encore de contact intime des éléments avec les parois de l'enveloppe. On peut donc facilement insérer les éléments et les disposer de la meilleure façon dans la pièce. Ensuite, grâce aux moyens précités, on place de façon durable la paroi de maintien dans la position de fonctionnement, cette position permettant de plaquer les éléments contre la paroi de l'enveloppe apte à dissiper la chaleur.

On notera en outre que le module selon l'invention présente d'autres avantages, notamment :
- la paroi d'évacuation de la chaleur n'est plus obligatoirement la paroi inférieure du module, paroi contre laquelle les éléments étaient en contact intime du fait de la gravité (puisque l'on est apte à plaquer les éléments facilement contre n'importe quelle paroi du module sans que le procédé d'assemblage du module soit complexe). De cette façon, on dispose de plus de flexibilité dans le choix de la paroi d'évacuation de la chaleur (paroi en contact avec les éléments, éventuellement par l'intermédiaire d'un tapis thermique), et on peut choisir la paroi la plus adaptée en fonction des organes entourant le module (par exemple, paroi la plus proche d'un élément de refroidissement ou plus éloignée d'un autre organe dégageant de la chaleur),
- en disposant d'une enveloppe déjà partiellement formée (plusieurs parois réalisées en une seule pièce), on simplifie le procédé d'assemblage du module, en évitant un positionnement relatif complexe des parois les unes par rapport aux autres. De plus, le fait que l'enveloppe comprenne moins de pièce permet de s'affranchir de nombreux problèmes, comme les problèmes d'étanchéité entre les différentes pièces de l'enveloppe. On peut donc simplifier le procédé d'assemblage du module et diminuer les coûts associés à la fabrication de celui-ci.

On va maintenant décrire l'invention en référence aux figures annexées, montrant un mode de réalisation de l'invention et nullement limitatives, dans lesquelles :
- la figure 1 est une vue en éclaté d'un module de stockage d'énergie selon un mode de réalisation de l'invention,
- la figure 2 est une vue de côté du module de la figure 1,
- la figure 3 est une vue en coupe du module de la figure 1, montrant les mécanismes d'évacuation de la chaleur,
- la figure 4 est une vue en perspective d'un coeur de module du module de la figure 1,
- la figure 5 est une vue en perspective d'une structure de calage du module de la figure 1,
- les figures 6A et 6B représentent différents stades intermédiaires du procédé d'assemblage du module selon la figure 1,
- la figure 7 est une vue de côté d'une cale selon une variante du mode de réalisation de la figure 1,
- les figures 8A et 8B sont des vues de côté d'un module selon une variante du mode de réalisation de la figure 1, à différentes étapes du procédé d'assemblage du module.

Comme indiqué plus haut, le module 10, 100 selon l'invention est apte à contenir une pluralité d'éléments 14, 114 de stockage d'énergie, et comprend :
- une enveloppe 16 comprenant au moins une pluralité de parois latérales et deux parois d'extrémité 18A-18B, les parois latérales étant réalisées en une seule pièce 20, 120 présentant un contour fermé et dimensionnée pour entourer les éléments de stockage d'énergie,
- une paroi de maintien 22, 122 des éléments de stockage d'énergie distincte des parois de l'enveloppe, et destinée à s'étendre essentiellement parallèlement à l'une des parois latérales, dite paroi de référence 20A, 120A
- des moyens 24A-24B ; 80A-80B ; 124-126 aptes à modifier la position de la paroi de maintien 22, 122 entre au moins une position d'assemblage, dans laquelle elle se trouve à une première distance D1 de la paroi de référence 20A, 120A et une position de fonctionnement, dans laquelle elle se trouve à une deuxième distance D2 de la paroi de référence 22A, 122A, supérieure à la première distance D1.

Le module selon l'invention peut également comprendre l'une ou plusieurs caractéristiques de la liste ci-dessous :
- la pièce 20, 120 comprenant les parois latérales est ouverte à ses deux extrémités, le module comprenant en outre deux parois d'extrémité 18A-18B indépendantes de la pièce et apte à venir fermer celle-ci à ses deux extrémités ouvertes. La pièce est ainsi de forme tubulaire et peut être fabriquées en continu. Elle peut également être extrudée. Cela permet de limiter encore les coûts de fabrication du module. Alternativement, la pièce peut également intégrer l'une des parois d'extrémité de l'enveloppe et n'être ouverte qu'à une extrémité pour y glisser les éléments et les longerons. On diminue alors le nombre d'étapes d'assemblage mais la pièce est plus complexe à fabriquer,
- l'enveloppe 16 présente une forme parallélépipédique, la pièce 20 comprenant quatre parois latérales. Cette configuration est en effet la configuration optimale en termes d'encombrement du module,
- La cale peut présenter la forme d'un longeron 24A- 24B, 80A-80B s'étendant notamment sur toute la dimension de la paroi de référence. On remarquera en effet que les longerons sont plus faciles à insérer du fait de leur surface de contact moindre et du fait qu'ils sont en une seule pièce.
- Le rail peut comprendre tout simplement deux saillies longitudinales 38 entre lesquelles est destiné à être inséré la cale ou le longeron. Ces saillies permettent de retenir la cale dans le plan de la paroi de référence, cette dernière étant retenue par l'empilement sans jeu des différents éléments dans l'enveloppe, selon la direction normale à la paroi. Ces rails sont alors assez simples à fabriquer. Ils peuvent toutefois comprendre des formes plus complexes, par exemple un retour 39 comprenant une surface de butée située à distance de la paroi de référence 20A et parallèle à celle-ci, pour bloquer également la cale ou le longeron selon la direction normale à la paroi de référence. Lorsque la paroi de référence est la paroi inférieure du module, les rails 26A-26B peuvent également servir à maintenir la paroi de maintien 22 à distance de la paroi de référence avant l'insertion des cales dans l'enveloppe, ce qui permet de faciliter leur insertion et d'éviter de soulever trop brusquement la paroi de maintien, risquant de modifier la disposition des éléments 14 sur celle-ci;
- une pluralité de cales ou longerons, par exemple deux cales, peuvent être placés entre une paroi de référence et la paroi de maintien,
- la cale 24A-24B présente une forme biseautée 25 à l'une de ses extrémités selon la direction longitudinale. Son épaisseur est donc variable selon cette direction, ce qui permet de faciliter son insertion dans le module, notamment lorsque la paroi de référence est la paroi inférieure de l'enveloppe et que la paroi de maintien supporte les éléments et est donc naturellement placée sur la paroi de référence (ou les rails) du fait du poids des éléments,
- les moyens pour modifier la position de la paroi de maintien peuvent également comprendre des moyens élastiques 90 ; 124 et des moyens 92 ; 126 pour maintenir les moyens élastiques dans une position contrainte. Dans ce cas, la position contrainte est notamment la position permettant d'obtenir que la distance entre paroi de référence et paroi de maintien soit la distance D1 de la position d'assemblage. Les moyens élastiques sont notamment des ressorts maintenus comprimés. Cette solution permet de gérer efficacement les jeux et tolérances de fabrication des différents éléments du module. En effet, en fonction des tolérances de fabrication de la pièce 20, 120 de l'enveloppe, on peut choisir la position de la paroi de maintien pour que les éléments soient plaqués contre la paroi supérieure du module, ce qui n'est pas toujours possible avec des cales rigides (moins de flexibilité concernant le choix de la position de fonctionnement),
- dans le cas présenté ci-dessus, les moyens pour maintenir le ou les ressorts en position contrainte peuvent comprendre au moins une pince 92 ; 126 présentant deux branches 94-96 ; 132-134 entre lesquelles s'étendent les moyens élastiques et un écartement prédéterminé entre ses branches. Les moyens pour maintenir les moyens élastiques en position contrainte peuvent également comprendre au moins une languette de matière reliant deux parois relativement auxquelles sont positionnées les extrémités des moyens élastiques, cette languette étant cassable.
- la ou au moins l'une des cales 80A-80B est configurée pour pouvoir se déformer élastiquement au moins selon la direction normale à la paroi de référence 20A à laquelle elle est associée. Cette déformation élastique peut être obtenue grâce au matériau dont est constituée la cale ou du fait de sa forme (forme en Z par exemple). Une telle cale 80 peut également être associée à des moyens élastiques 90, notamment mis en place entre une paroi inférieure 86 et une paroi supérieure 84 de celle-ci, et éventuellement des moyens de maintien 92,
- le module comprend au moins un organe 28, 128 réalisé en un matériau compressible, destiné à être placé entre la paroi de maintien 22, 122 et les éléments de stockage 14, 114 et/ou entre les éléments de stockage et une paroi latérale de l'enveloppe 20B, 120B opposée à la paroi de référence (paroi de dissipation thermique). Un tel organe permet de bien plaquer tous les éléments de stockage contre la paroi, en prenant en compte les tolérances de fabrication des différentes pièces du module, notamment des éléments, et également de faciliter l'insertion des longerons, du fait du débattement qu'elle offre selon la direction d'empilement. Cet organe peut être réalisé en un matériau électriquement isolant mais thermiquement conducteur tel que l'EPDM (éthylène-propylène-diène monomère) et peut notamment former un tapis thermique tel que mentionné plus haut. Il est dans ce cas de préférence placé entre la paroi choisie pour la dissipation thermique (notamment opposée à la paroi de référence) et les éléments. Un tel organe ou tapis thermique est de préférence essentiellement plan, et recouvre toute la surface d'une des parois de maintien ou de l'enveloppe. Le module peut également comprendre deux tapis, un étant placé à chacune des extrémités des éléments de stockage d'énergie,
- la paroi 120B de l'enveloppe opposée à la paroi de référence 120A est configurée de sorte que sa distance relativement à la paroi de référence varie localement. Elle peut par exemple comprendre des ondulations 121. La paroi est configurée de sorte que l'écart de distance ne dépasse pas 1 cm, notamment 5 mm. Une telle configuration permet de plaquer tous les éléments de stockage contre la paroi, même ceux de plus petite hauteur, sans pour autant endommager l'organe 128 ou tapis thermique, destiné à être compressé pour mieux gérer ces jeux. En effet, lorsque la paroi 120B n'est pas plane et qu'un élément 114 ayant une grande hauteur est placé entre la paroi de maintien et la paroi opposée à la paroi de référence, le tapis thermique est très compressé. Lorsque la distance varie entre la paroi de référence 120A et la paroi opposée 120B, il existe des zones (les zones les plus éloignées de la paroi de référence, qui ne seront pas en contact avec les éléments) qui peuvent permettre de laisser de l'espace à l'organe 28 pour que ce dernier se déforme. Alternativement, l'organe 128 peut être configuré pour comprendre des évidements, notamment présenter une configuration en créneaux, pour permettre sa déformation dans ces zones évidées,
- le ou au moins l'une des cales 24A-24B, 80A-80B, les moyens élastiques 124 et/ou la paroi de maintien 22, 122 sont réalisés en un matériau conducteur thermiquement. Les cales 24A-24B sont réalisées notamment en métal même si elles pourraient également être réalisées en un matériau thermiquement isolant. La paroi de maintien 22 est quant à elle réalisée de préférence en un matériau également électriquement isolant pour éviter les courts-circuits entre les éléments de stockage qui ne sont pas au même potentiel. Elle pourrait également être réalisée en métal et recouverte d'un tapis thermique. Cette configuration est particulièrement avantageuse puisqu'on crée alors, en plus de l'évacuation par la paroi principale de dissipation de la chaleur, une deuxième voie d'évacuation de la chaleur, par l'intermédiaire de la paroi de maintien et des cales. Selon la direction normale à la paroi de référence, les éléments étant empilés sans jeu dans l'enveloppe, la chaleur est transmise assez efficacement à l'enveloppe puisque le contact est intime entre les différentes pièces du module,
- le module comprend une seule paroi de référence 20A, 120A constituée par la paroi inférieure ou la paroi supérieure de l'enveloppe 16, constituant des surfaces d'évacuation plus importantes, qui sont qui plus est en contact avec tous les éléments. Le module pourrait toutefois également comprendre le cas échéant plusieurs parois de référence ou une paroi de référence qui serait verticale une fois le module mis en place dans son environnement,
- le module comprend une structure de calage 50, 150 des éléments de stockage, réalisée en un matériau isolant électriquement, notamment en matière plastique, et comprenant une pluralité de logements 52 pour accueillir les éléments de stockage d'énergie 14, 114. Une telle structure 50, 150 permet de caler les éléments les uns relativement aux autres et de les isoler électriquement les uns par rapport aux autres. Dans le procédé selon l'invention, le placement des éléments de stockage 14 étant effectué par glissement, une telle structure est particulièrement avantageuse, puisqu'elle permet de fixer la position relative des éléments de stockage d'énergie avant l'insertion des éléments dans l'enveloppe et dispense donc un opérateur d'effectuer des ajustements complexes, à l'aveugle. De plus, une telle structure offre un cadre pour permettre la mise en place de façon automatisée des éléments de stockage dans celle-ci,
- la structure de calage 50, 150 comprend des moyens de positionnement 70 ; 170, notamment de fixation, relativement à la paroi de maintien 22, 122. Ainsi, même si la paroi de maintien bouge ou s'incline lors de l'insertion des longerons dans le module, le positionnement du coeurde module est conservé,
- la structure de calage 50 comprend au moins l'un des moyens suivants :
   - des moyens 58 de guidage de câbles 60, et/ou
   - des moyens 56 pour loger une connexion électrique apte à coopérer avec des moyens de connexion complémentaires reliés aux éléments de stockage, et/ou
   - des moyens 68 pour loger une connexion à une carte électronique 62, et/ou
   - des moyens 66 de fixation de la carte électronique 62, et/ou
   - des moyens de fixation d'au moins un capteur.

On profite de l'existence de la structure pour simplifier encore le procédé de fabrication du module en intégrant des fonctions sur celle-ci. On assemble notamment toute la connectique sur la structure avant de placer les éléments sur celle-ci, ce qui permet de préparer les structures hors de la chaîne de montage principale et de diminuer encore les coûts du procédé de fabrication du module.
- les éléments de stockage sont disposés côte à côte de sorte que chaque ensemble possède une première extrémité qui vient en butée contre la paroi de maintien et une deuxième extrémité qui vient en butée contre la paroi de l'enveloppe opposée à la paroi de référence. Par « qui vient en butée contre », on entend que les éléments sont maintenus en position par lesdites parois. Les éléments peuvent par exemple être en contact direct avec l'une des parois. Une pièce non rigide (tel qu'un tapis ou une feuille isolante) peut aussi être insérée entre les éléments et l'une des ou les parois. On ne considère pas que l'ensemble vient en butée contre une telle pièce non rigide car cette dernière n'est pas susceptible d'influer seule sur la position de l'une ou l'autre des faces de contact et/ou la distance entre les deux faces de contact.

L'invention a également pour objet un procédé d'assemblage d'un module 10 ; 100 de stockage d'énergie destiné à contenir une pluralité d'éléments de stockage d'énergie 14 ; 114 dans une enveloppe 16, comprenant les étapes suivantes :
- placement d'une paroi de maintien 22 ; 122 dans une pièce 20 ; 120 présentant un contour fermé et dimensionnée pour accueillir les éléments de stockage, la pièce formant une portion d'enveloppe 16 du module et comprenant au moins les parois latérales de l'enveloppe, de sorte que la paroi de maintien 22 ; 122 soit parallèle et adjacente à l'une des parois latérales, dite paroi latérale de référence 20A; 120A, et que la paroi de maintien soit placée dans une position d'assemblage, à une première distance D1 de la paroi de référence,
- insertion par glissement des éléments de stockage 14 ; 114 dans la pièce 20 ; 120, de sorte que les éléments une fois insérés soient en contact avec la paroi de maintien 22 ; 122,
- modification de la position de la paroi de maintien 22 ; 122 de sorte qu'elle passe de la position d'assemblage à une position de fonctionnement, dans laquelle elle est à une deuxième distance D2 de la paroi de référence, supérieure à la première distance D1, la position de fonctionnement étant choisie, de façon à plaquer au moins un organe en association avec les éléments de stockage contre une paroi 20B, 120B de la pièce opposée à la paroi de référence 20A ; 120A l'étape de modification de la position de la paroi de maintien (22) comprenant une étape d'insertion d'au moins une cale, notamment un ou plusieurs longerons (24A-24B ; 80A-80B), dans la pièce (20), entre la paroi de référence (20A) et la paroi de maintien (22), l'insertion étant effectuée par coopération de 'au moins une cale (24A-24B ; 80A-80B) avec au moins un rail de guidage (26A-26B) de la paroi de référence (20A).

Le procédé selon l'invention peut également comprendre l'une ou plusieurs des caractéristiques listées ci-dessous :
- les éléments 14; 114 peuvent être positionnés relativement à la paroi de maintien 22 ; 122 avant insertion dans la pièce, ceux-ci et la paroi de maintien étant insérés simultanément dans la pièce,
- l'étape de modification de la position de la paroi de maintien 22 ; 122 peut (également ou alternativement) comprendre une étape de libération de moyens élastiques 90 ; 124 précontraints. Ces moyens peuvent notamment être insérés simultanément à la ou aux cales 80A-80B car ils sont d'un seul tenant avec cette ou ces cales. L'étape de libération de ces moyens élastiques précontraints est notamment une étape de déplacement ou de rupture d'un moyen de maintien 92 ; 126 de ces moyens élastiques en position contrainte,
- l'insertion du ou d'au moins une des cales ou longerons 24A-24B ; 80A-80B est effectuée par coopération du longeron avec un rail de guidage 26A-26B ménagé d'un seul tenant avec la paroi de référence,
- l'étape d'insertion des éléments de stockage dans la pièce comprend une étape d'insertion des éléments de stockage 14 ; 114 dans une structure de calage 50 ; 150 comprenant une pluralité de logements 52 aptes respectivement à accueillir au moins un élément de stockage et une étape de positionnement de la structure de calage 50 contenant les éléments relativement à la paroi de maintien 22 ; 122,
- le procédé comprend, avant l'étape de positionnement de la structure de calage, notamment d'insertion des éléments 14 dans la structure de calage 50, une étape d'assemblage d'éléments de connectique électronique, notamment au moins un câble 60, au moins une carte électronique 62, au moins un connecteur, au moins un capteur, sur la structure de calage 50.

On va maintenant décrire plus particulièrement le module 10 représenté sur les figures.

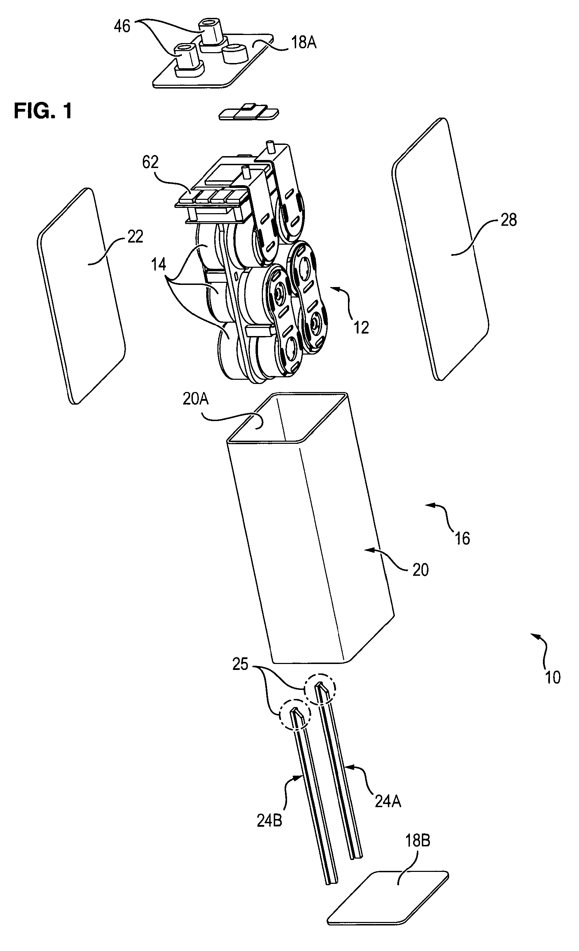

Comme on le voit sur la figure 1, le module 10 comprend tout d'abord un coeur de module 12 comprenant six éléments de stockage d'énergie 14 et que l'on décrira plus avant par la suite.

Il comprend également une enveloppe 16 de forme essentiellement parallélépipédique et comprenant six parois. Cette enveloppe est réalisée en trois parties : une première paroi d'extrémité 18A, une deuxième paroi d'extrémité 18B et une pièce 20 comprenant toutes les parois latérales du module. Cette pièce est de forme tubulaire. Elle présente un contour fermé et est bien entendu dimensionnée pour accueillir le coeur de module 12 et notamment les éléments 14. L'enveloppe est généralement réalisée en un matériau thermiquement conducteur, par exemple un matériau métallique.

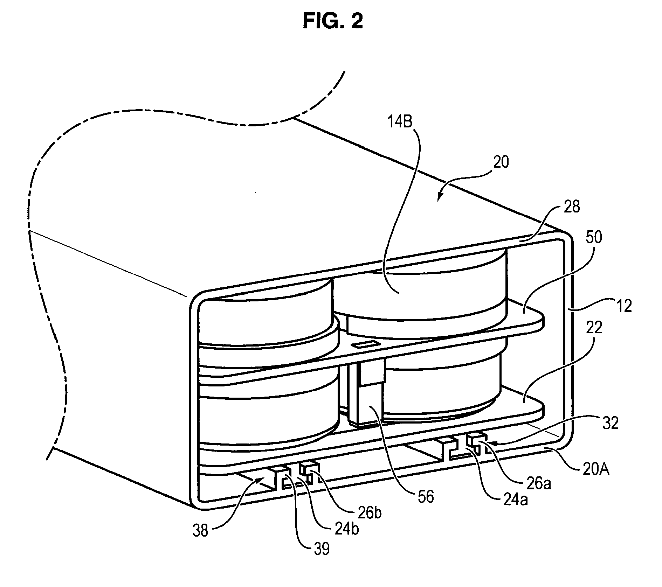

Le module comprend également, comme on le voit sur les figures 1 et 2 une paroi de maintien 22 destinée à être placée entre la paroi inférieure 20A du module (appelée paroi de référence 20A) et la paroi inférieure du coeur de module. Cette paroi 22 est sensiblement de mêmes dimensions que la paroi de référence 20A et est destinée à être positionnée sensiblement parallèlement à cette dernière. Elle est également réalisée en un matériau thermiquement conducteur, mais électriquement isolant pour éviter les courts-circuits entre les différents éléments de stockage 14.

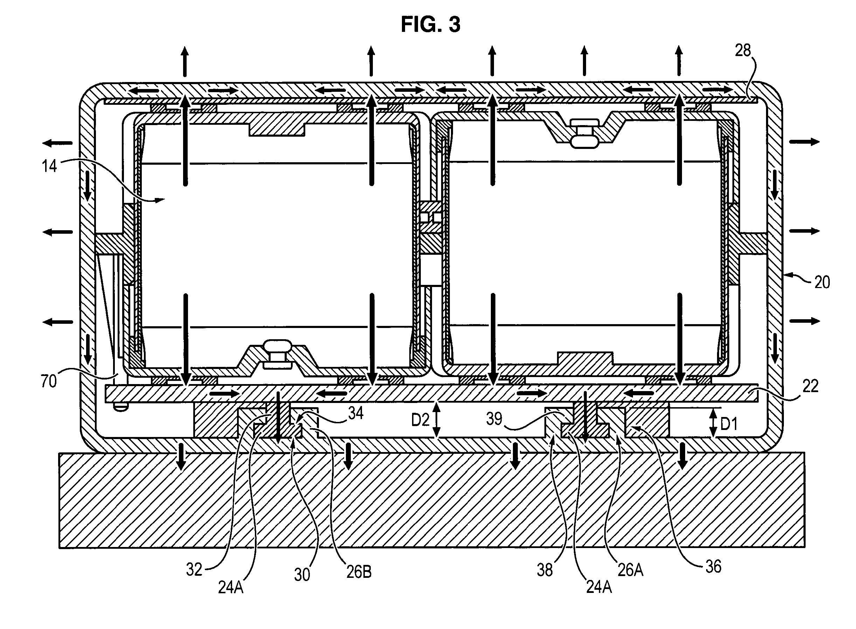

Entre la paroi inférieure 20A, dite paroi de référence, et la paroi de maintien 22, le module comprend également deux longerons 24A et 24B intercalés. Comme on le voit sur les figures 2 et 3, les longerons 24A, 24B sont destinés à coopérer avec des rails de guidage ménagés sur la paroi de référence 20A, chacun des rails de guidage 26A, respectivement 26B, accueillant un longeron 24A, respectivement 24B. On remarquera que les rails de guidage s'étendent dans ce mode de réalisation dans une direction essentiellement parallèle à une arête du parallélépipède mais cela n'est pas une nécessité. Les rails s'étendent sur une partie seulement de la dimension longitudinale de la paroi de référence 20A mais ils pourraient s'étendre sur la totalité de cette dimension.

Comme cela est visible sur la figure 1, les longerons 24A, 24B sont destinés à s'étendre sensiblement sur toute la longueur de la paroi de référence 20A. Ils sont réalisés en métal et sont thermiquement conducteurs. Les longerons 24A, 24B présentent chacun une extrémité longitudinale biseautée 25. Leur épaisseur à cette extrémité est donc inférieure à leur épaisseur maximale, ce qui permet de faciliter leur insertion dans l'enveloppe 20.

Chaque longeron 24A, 24B présente une section transversale (ou profil) en T inversé. Il comprend donc une face inférieure 30 plane destinée à être en contact avec la paroi de référence 20A. A son extrémité supérieure, il comprend une saillie 32 destinée à soutenir la paroi de maintien 22 et deux faces de butée 34 parallèle à la face 30 et s'étendant de part et d'autres de la saillie 32.

Le rail de guidage 26A, 26B comprend quant à lui deux saillies 36 longitudinales dont l'écartement est choisi pour correspondre à la dimension transversale du longeron. Chaque saillie 36 comprend une partie de guidage 38 s'étendant selon un plan essentiellement normal à la paroi de référence 20A. Cette partie de guidage permet de guider et de maintenir le longeron en position dans le plan de la paroi de référence. A l'extrémité libre de cette partie de guidage 38, à distance de la paroi de référence 20A, chaque saillie 36 comprend un retour 39 essentiellement parallèle à la paroi de référence 20A et orienté vers l'autre saillie 36 du rail de guidage, agencé pour coopérer avec les faces de butée 34 du longeron.

On notera que chaque rail est conformé pour que l'écartement entre les deux saillies 36 au niveau des retours 39 permette le passage de la saillie 32 du longeron et que la paroi de maintien 22 soit en appui seulement sur la saillie 32 du longeron, à savoir qu'il y ait une distance entre l'extrémité supérieure du rail de guidage 26 et la paroi de maintien 22, une fois le module assemblé, comme on le voit sur la figure 2.

Le module comprend également un tapis thermique 28 destiné à être intercalé entre l'extrémité supérieure du coeur de module 12 et la paroi supérieure 20B de la pièce 20. Ce tapis thermique est réalisé en un matériau électriquement isolant et thermiquement conducteur, tel que l'EPDM (ethylène-polypropylène-diène monomère). Ce matériau est également élastiquement déformable, notamment compressible.

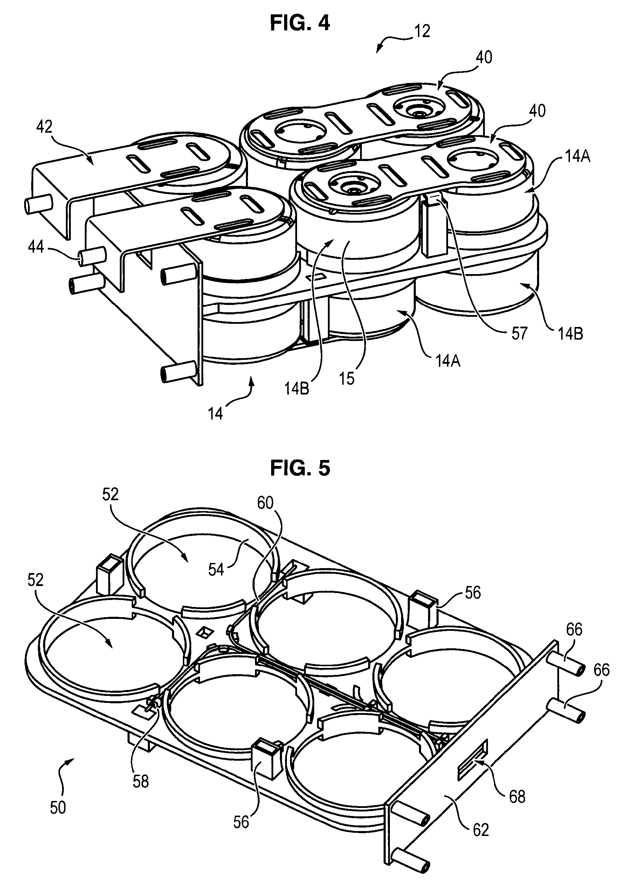

On va maintenant décrire plus spécifiquement le coeur de module 12, à l'aide des figures 4 et 5. Ce coeur de module, comprend six éléments de stockage d'énergie 14, chaque élément présentant de façon classique une forme essentiellement cylindrique et comprenant un boîtier tubulaire 14A avec un fond, ce fond formant une première borne électrique (par exemple une borne positive) de l'élément, et un couvercle 14B, isolé électriquement du boîtier 14A, par exemple par un joint électriquement isolant inséré entre ces deux pièces. Le couvercle forme une deuxième borne électrique de l'élément, par exemple une borne négative. Il comprend une paroi d'extrémité et un rebord cylindrique 15 couvrant partiellement la paroi latérale du boîtier, le diamètre de ce rebord étant supérieur au diamètre de la paroi latérale.

Les éléments 14 sont reliés électriquement en série à l'aide de barrettes de connexion 40 réalisées en un matériau électriquement et thermiquement conducteur, notamment métallique. Ces barrettes 40 relient chacune une première borne d'un élément 14 donné à une deuxième borne d'un élément 14 adjacent. Chaque élément 14 est relié à un élément différent à chacune de ses bornes. Le coeur de module 12 comprend également des barrettes 42 ne reliant l'élément sur lequel elles sont fixées à aucun autre élément. Ces barrettes sont reliées par des connecteurs 44 aux bornes 46 du module, ménagées ici sur la paroi 18A de l'enveloppe, par lesquelles le module est relié aux éléments électriques extérieurs.

Le coeur de module 12 comprend également une structure de calage 50, plus visible sur la figure 5. Cette structure de calage 50 est réalisée en un matériau électriquement isolant, notamment en matière plastique, par moulage, ce qui permet de lui donner une forme complexe et d'intégrer de nombreuses fonctions sur cette structure.

La structure 50 comprend une pluralité de logements 52, chaque logement étant dimensionné pour accueillir un élément de stockage d'énergie 14. Chaque logement est d'ailleurs entouré d'un rebord 54 destiné à coopérer avec une paroi latérale du boîtier 14A et une extrémité libre du rebord 15 du couvercle 14B pour effectuer le centrage et le maintien en position selon la direction axiale de l'élément.

Cette structure de calage 50 comprend également des saillies évidées 56 situées entre les logements 52. Ces saillies 56 sont configurées pour maintenir en position un connecteur électrique de type femelle (non visible), par exemple une cosse de type Faston®. Un tel connecteur coopère avec un connecteur complémentaire, de type mâle, relié à une borne électrique d'un élément de stockage d'énergie. Dans le mode de réalisation décrit ici, ce connecteur complémentaire est une languette 57 ménagée sur la barrette 40 de connexion, dans un plan essentiellement perpendiculaire au plan de la barrette et à la face d'extrémité des éléments 14 de stockage d'énergie. On distingue un tel connecteur 58 enfiché dans la saillie 56 sur la figure 4.

La structure de calage 50 comprend également des moyens de guidage de câbles, constitués par des paires de languettes 58 déformables entre lesquelles on peut insérer les câbles 60 par clipsage. Ces câbles 60 sont généralement utilisés dans les modules de stockage d'énergie pour relier les éléments 14 à une carte électronique 62 (visible sur la figure 1), apte à équilibrer la charge des différents éléments 14 du module. Ils sont notamment reliés au connecteur placé dans la saillie 56.

La carte électronique 62 est destinée à être positionnée verticalement, parallèlement à une face d'appui 64 de la structure de calage, située à une extrémité de celle-ci. La structure de calage 50 comprend d'ailleurs des moyens de fixation de la carte électronique 62, constitués par 4 fûts 66 à l'aide desquels la carte électronique peut être vissée sur la structure 50. Cette structure 50 comprend également un emplacement 68 pour fixer un connecteur électrique coopérant avec la carte électronique. Cet emplacement est ici un évidement réalisé dans la face d'appui 64 en regard de l'emplacement prévu pour la connexion sur la carte électronique. Le connecteur destiné à être placé dans l'évidement 68 est relié aux câbles 60 et enfiché dans la carte électronique 62.

La structure de calage 50 comprend, en plus de tous les moyens décrits précédemment pour intégrer facilement la connectique du module, des moyens de positionnement de la structure 50 sur la paroi de maintien. Ces moyens comprennent des plots verticaux 70 s'étendant vers le bas et destinés à être insérés dans des orifices complémentaires de la paroi de maintien 22, comme on le voit mieux sur la figure 3.

On va maintenant décrire le procédé d'assemblage du module tel que décrit ci-dessus.

Lors d'une première étape, on monte toute la connectique (câbles 60, connecteurs, carte électronique 62, etc.) sur la structure de calage 50. Grâce à la présence de la structure de calage, cette opération peut en effet être effectuée avant que les éléments soient montés sur la structure et hors de la chaîne d'assemblage principale, ce qui permet un gain de temps conséquent.

On insère ensuite les éléments 14 dans les logements 62 prévus à cet effet de la structure de calage. Les éléments 14 étant destinés à être reliés en série à l'aide de barrettes, on dispose les éléments de sorte que la deuxième borne (couvercle 14B) d'un élément donné soit située dans un même plan que la première borne (fond du boîtier 14A) d'un élément adjacent. Comme on le voit sur les figures, les éléments sont donc placés tête-bêche dans la structure 50.

Ensuite, une fois les éléments 14 positionnés correctement, à l'aide des rebords 54, on place les barrettes 40, 42 sur les éléments, sur une face d'extrémité des éléments 14. On positionne les barrettes 40 de sorte que leur languette 58 soit insérée dans la cosse se trouvant dans l'évidement de la saillie 56 puis on soude les barrettes sur les éléments. On retourne ensuite le coeur du module 12 et on effectue la même opération de l'autre côté.

On monte ensuite la face d'extrémité 18A sur le coeur de module, de sorte que les connecteurs 46 des barrettes 42 soient correctement placés relativement aux bornes 72 du module portées par cette paroi 18A.

On place ensuite le coeur du module 12 muni de la face d'extrémité sur la paroi de maintien 22. On positionne correctement le coeur de module 12 sur cette paroi, à l'aide des moyens 70 décrits plus haut.

On place ensuite le tapis thermique 28 sur la face d'extrémité supérieure du coeur de module 12.

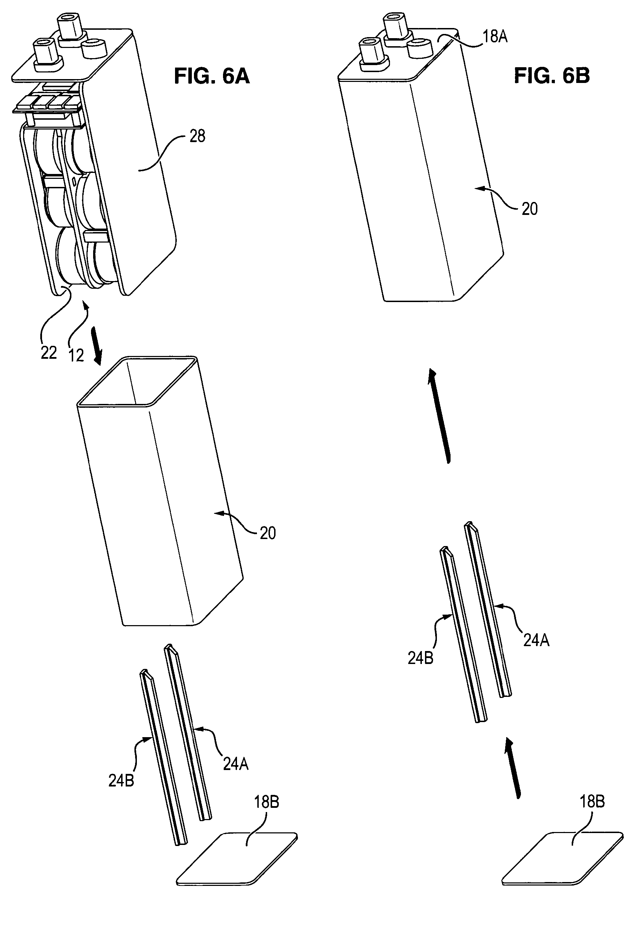

Une fois ce sous-ensemble constitué, comme on le voit sur la figure 6A, on glisse le sous-ensemble dans la pièce 20 de l'enveloppe de sorte que la paroi de maintien 22 soit parallèle à la paroi de référence 20A, correspondant à la paroi inférieure du module, et ce jusqu'à ce que la paroi d'extrémité 18A soit en butée contre l'extrémité correspondante de la pièce 20. Puis, comme on le voit sur la figure 6B, on glisse les longerons 24A, 24B dans les rails de guidage 26A, 26B de l'enveloppe prévus à cet effet. Les longerons sont insérés dans les rails par leur extrémité biseautée 25.

Avant l'insertion des longerons, la paroi de maintien 22 reposait sur les rails de guidage de la pièce 20, à une première distance D1 de la paroi de référence 20A. La pièce étant configurée de sorte que sa hauteur entre l'extrémité supérieure des rails 26A, 26B et la paroi supérieure de la pièce est supérieure à la hauteur du sous-ensemble précité, et ce quelles que soient les tolérances de fabrication des éléments, on glisse facilement le sous-ensemble dans le module. Comme il n'y a pas contact entre le sous-ensemble et la paroi supérieure, cette opération est en effet simple.

Ensuite, lorsque l'on insère les longerons dans la pièce, ils surélèvent le sous-ensemble permettant au tapis thermique 28 de venir au contact intime de la paroi supérieure 20B de la pièce 20 de l'enveloppe, également appelée paroi de dissipation thermique car c'est en priorité par cette paroi qu'est évacuée la chaleur générée dans le module. La paroi de maintien 22 est alors à une deuxième distance D2, supérieure à la première distance D1, de la paroi de référence 20A. Le tapis thermique est même sollicité en compression, pour assurer un bon contact avec la paroi supérieure. Ce caractère déformable du tapis thermique permet également d'offrir un contact intime avec la paroi supérieure quels que soient les jeux de fabrication des longerons, de la pièce 20 et des éléments, tout en évitant que l'empilement des différents éléments ne tienne pas à l'intérieur de la pièce 20.

Une fois les longerons insérés dans le module, il ne reste ensuite plus qu'à placer la paroi 18B sur la pièce 20 et à fixer les parois d'extrémité respectives 18A, 18B à la pièce pour obtenir le module fini. On assure l'étanchéité entre ces différents éléments à l'aide de joint élastique placés à l'interface de la pièce 20 et des parois d'extrémité 18A, 18B ou surmoulés sur l'une ou l'autre de ces éléments.

Comme on le voit sur la figure 3, le module fini permet une meilleure diffusion de la chaleur puisque la chaleur est diffusée par deux voies distinctes : par le biais du tapis thermique et de la paroi supérieure 20B d'une part et par le biais de la paroi de maintien 22 et des longerons 24A-24B d'autre part. La chaleur est donc évacuée plus rapidement vers l'enveloppe du module. En outre, l'enveloppe présentant un contour fermé réalisé en une seule pièce, la chaleur est diffusée facilement (pas d'interface) aux parois verticales depuis la paroi supérieure et/ou la paroi inférieure du module. La chaleur est alors mieux répartie dans le module et la surface d'échange avec l'air ou d'autres éléments de l'environnement du module (ici, par exemple un châssis du véhicule, placé au contact de la paroi inférieure du module) est donc plus importante. Cela permet également d'améliorer l'évacuation de la chaleur.

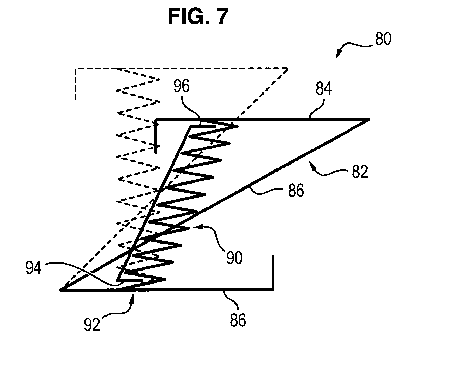

On va maintenant décrire en référence à la figure 7 une variante du mode de réalisation décrit précédemment. Dans ce mode de réalisation, on insère également des longerons 80A, 80B dans la pièce en lieu et place des longerons 24A, 24B. Ces longerons s'étendent également essentiellement selon toute la dimension longitudinale de la paroi de référence et sont réalisé en métal. Leur profil varie toutefois de celui des longerons 24A, 24B représentés plus haut et sont représentés à la figure 7.

Comme on le voit, les longerons 80 comprennent un profilé en Z 82, présentant une paroi d'appui 84 (inférieure dans le cas présent) sur la paroi de référence 20A et une paroi d'appui 86 (supérieure dans le cas présent) sur la paroi de maintien. Ces deux parois 84, 86 sont reliées par une paroi diagonale 88, qui permet au profilé d'acquérir une certaine élasticité dans la direction normale aux parois 84, 86 (également normale aux parois 20A, 22 lorsque le longeron 80 est placé dans la pièce) puisque la hauteur du profilé peut être modifiée selon l'inclinaison de la paroi diagonale, comme on le voit d'ailleurs entre les positions représentées en trait plein et en trait pointillés sur la figure 7.

Le profilé 82 comprend également dans sa paroi diagonale une pluralité d'ouvertures réparties sur toute la longueur du profilé (non visible sur la figure). Il peut notamment comprendre une ouverture à proximité de chacune de ses extrémités et une à proximité du milieu du profilé selon cette direction.

Dans chacune des ouvertures est mis en place un ressort 90 dont une première extrémité est reliée à la paroi supérieure 84 du profilé et une deuxième extrémité est reliée à la paroi inférieure 86 de ce dernier.

Le ressort 90 est maintenu en position contrainte en compression, c'est-à-dire que sa longueur est inférieure à sa longueur au repos par une pince 92 comprenant deux branches 94, 96 attachées respectivement aux extrémités du ressort et ayant une longueur prédéterminée (correspondant à la longueur du ressort 90 et donc inférieure à la longueur au repos du ressort). On notera qu'alternativement les moyens de maintien pourraient comprendre une ou plusieurs languettes verticales reliant les parois 84, 86 du longeron 80, une telle languette étant cassable.

Lorsqu'on insère le longeron 80 dans la pièce, les ressorts 90 sont en position contrainte à l'aide des pinces 92, ce qui constitue la position d'assemblage du module, représentée en traits pleins sur la figure 7. Les longerons sont ainsi insérés facilement dans la pièce. Ensuite, on enlève les pinces de sorte que les ressorts tendent à revenir vers leur longueur au repos ce qui permet d'augmenter la hauteur du longeron. La position non contrainte correspond à la configuration du longeron 80 lorsque la paroi de maintien est en position de fonctionnement, représentée en traits pointillés sur la figure 7.

Un tel longeron permet de plaquer les éléments contre la paroi 20B de dissipation thermique du module et ce quelles que soient les tolérances de fabrication des différents éléments (pièce 20, éléments 14). En effet, contrairement au cas où le longeron est rigide, la position de fonctionnement de la paroi de maintien 22 et la distance D2 peut varier en fonction des modules.

On notera qu'on choisit la longueur au repos du ressort de sorte qu'elle puisse plaquer les éléments contre la paroi de dissipation même si les éléments ont leur taille minimale et la pièce sa taille maximale compte tenu des jeux de fabrication. La longueur au repos du ressort est notamment supérieure à sa longueur lorsque le longeron est en configuration de fonctionnement.

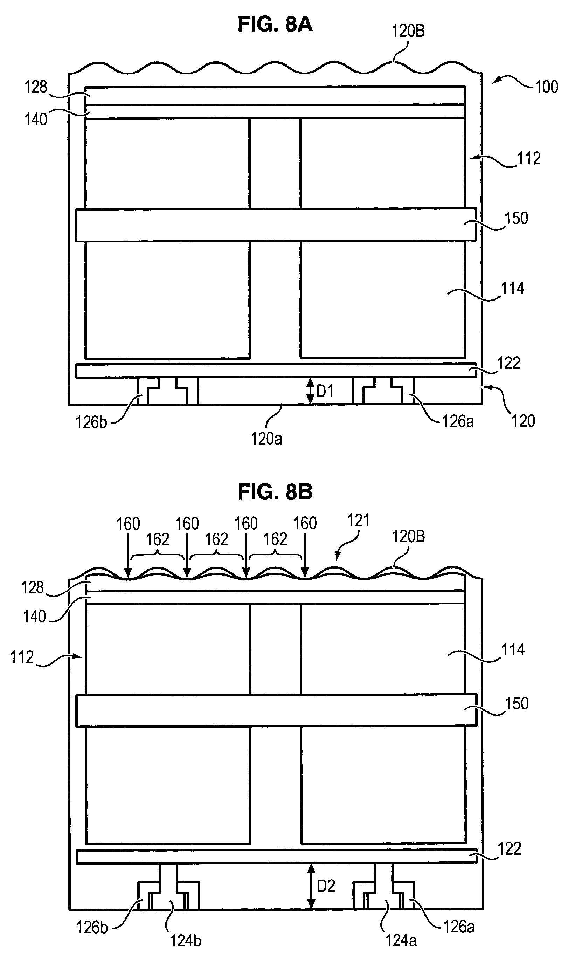

On a représenté encore une variante du mode de réalisation du module de la figure 1 aux figures 8A et 8B. Sur ces figures, on voit un module 100 en coupe pendant le montage du coeur de module 112 dans la pièce 120 (distance D1 entre les parois de maintien et de référence) puis le module suite à l'insertion du coeur de module dans la pièce 120 (distance D2 entre les parois de maintien et de référence). On ne commentera pas les points communs de ce module avec celui de la figure 1.

Comme on le voit sur les figures, le module selon cette variante comprend une paroi de dissipation thermique 120B ondulée, contrairement à la paroi de dissipation thermique 20B du premier mode de réalisation. Ces ondulations 121 s'étendent sur toute la dimension longitudinale de la pièce et sont suffisamment rapprochées pour que le tapis thermique 128 au droit de chaque élément 114 soit apte à être en contact avec la paroi 120B en plusieurs endroits. Ces ondulations ont également une hauteur qui ne dépasse pas 1 cm pour éviter d'augmenter le volume du module. Leur écartement est notamment inférieur à 2 cm. Leur présence sur la paroi supérieure a été imaginée pour ne pas endommager le tapis thermique.

En effet, en fonction des tolérances de fabrication de la pièce 120, et des éléments 124 notamment, la distance à atteindre pour que les éléments 114 soient en contact thermique soient en contact avec la paroi 120B ne sera pas toujours la même et le tapis thermique ne sera donc pas toujours compressé de la même façon. Ici, on permet que le tapis soit en contact intime avec la paroi supérieure au niveau des lieux 160 de la paroi 120B les plus proches de la paroi 120A quelles que soient les tolérances de fabrication des différents éléments. Toutefois, lorsque le tapis doit être très compressé, il est susceptible de s'endommager si sa limite de compressibilité est dépassée. On évite ce phénomène en ménageant des zones 162, entre les lieux de contact 160, dans lesquelles le tapis thermique 128 n'est pas autant compressé et peut même « amortir » la compression subie au niveau des lieux de contact.

On notera que ces modes de réalisation ne décrivent pas l'invention de façon limitative. Cette dernière peut présenter de nombreuses variantes relativement à ce qui a été décrit, tout en restant dans le cadre des revendications. Par exemple :
- la paroi de référence peut être n'importe quelle paroi de la pièce 20. La pièce peut également comprendre plusieurs parois de référence ;
- le module peut ne pas être parallélépipédique,
- la forme de la paroi de dissipation thermique n'est pas limitée à ce qu'on a décrit. En outre, pour remplir la même fonction que celle remplie par les ondulations, on peut évider le tapis thermique par zones,
- la pièce de l'enveloppe peut comprendre l'une des parois d'extrémité, - le nombre de longerons peut être différent de ce qui a été décrit,
- les longerons et/ou la paroi de maintien peuvent être réalisés en un matériau thermiquement isolant,
- la forme des longerons (section, etc.) n'est pas limitée à ce qu'on a décrit. Les longerons peuvent par exemple ne pas comporter d'extrémité biseautée,
- un tapis thermique peut être introduit en remplacement ou en supplément du tapis thermique 38 entre la paroi de maintien 22 et les éléments 14. Le module peut également ne comprendre aucun tapis thermique,
- les rails de guidage sont optionnels. Lorsqu'ils sont prévus, leur forme n'est pas limitée à ce qui a été décrit,
- les moyens de maintien des moyens élastiques peuvent être également cassables et relier deux parois du module notamment de la cale,
- la structure de calage est optionnelle. Sa forme et les fonctions qu'elle intègre ne sont pas limitées à ce qui a été décrit.

De même, concernant le procédé d'assemblage, les étapes peuvent varier en fonction des éléments présents ou pas dans le module. L'ordre des étapes n'est pas non plus limité à ce qui a été décrit. Par exemple, concernant un module tel que celui de la figure 1, la paroi d'extrémité 18A pourrait être fixée au coeur de module à la fin de l'assemblage, juste avant sa fixation à la pièce 20, ou alors avant que la carte électronique ne soit fixée sur la structure. La poussée de la structure 150 peut également être effectuée selon le sens longitudinal.

## Revendications

1. Module (10; 100) de stockage d'énergie apte à contenir une pluralité d'éléments (14; 114) de stockage d'énergie, le module comprenant :
- une enveloppe (16) comprenant au moins une pluralité de parois latérales et deux parois d'extrémité (18A; 18B), les parois latérales étant réalisées en une seule pièce (20 ; 120) présentant un contour fermé et dimensionnée pour entourer les éléments de stockage d'énergie,
- une paroi de maintien (22 ; 122) des éléments de stockage d'énergie distincte des parois de l'enveloppe, et destinée à s'étendre essentiellement parallèlement à l'une des parois latérales, dite paroi de référence (20A ; 120A),
- des moyens (24A-24B ; 80A-80B ; 124-126) aptes à modifier la position de la paroi de maintien (22, 122) entre au moins une position d'assemblage, dans laquelle elle se trouve à une première distance (D1) de la paroi de référence (20A, 120A) et une position de fonctionnement, dans laquelle elle se trouve à une deuxième distance (D2) de la paroi de référence (20A, 120A), supérieure à la première distance (D1),
les moyens pour modifier la position de la paroi de maintien comprenant au moins une cale (24A-24B ; 80A-80B) destinée à être insérée entre la paroi de référence (20A) et la paroi de maintien (22), la cale présentant notamment la forme d'un longeron,
la paroi de référence (20A) comprenant au moins un rail de guidage (26A-26B) apte à coopérer avec le ou au moins l'une des cales (24A-24B ; 80A-80B).

2. Module selon la revendication précédente, dans lequel la pièce (20) comprenant les parois latérales est ouverte à ses deux extrémités, le module comprenant en outre deux parois d'extrémité (18A-18B), chaque paroi étant indépendante respectivement de la pièce et apte à venir fermer celle-ci à une extrémité ouverte.

3. Module selon l'une quelconque des revendications 1 ou 2, dans lequel la ou au moins l'une des cales (80A-80B) est configurée pour pouvoir se déformer élastiquement au moins selon la direction normale à la paroi de référence (20A) à laquelle elle est associée

4. Module selon l'une quelconque des revendications précédentes, dans lequel les moyens pour modifier la position de la paroi de maintien peuvent également comprendre des moyens élastiques (90 ; 124) et des moyens (92 ; 126) pour maintenir les moyens élastiques dans une position contrainte.

5. Module selon les revendications 3 et 4 en combinaison, dans lequel les moyens élastiques (90) sont d'un seul tenant avec la ou au moins l'une des cales (80A-80B).

6. Module selon l'une quelconque des revendications précédentes, comprenant au moins un organe (28) réalisé en un matériau compressible destiné à être placé entre la paroi de maintien (22) et les éléments de stockage (14) et/ou entre les éléments de stockage et une paroi latérale de l'enveloppe (16) opposée à la paroi de référence.

7. Module selon l'une quelconque des revendications précédentes, dans lequel le ou au moins l'une des cales (24A-24B ; 80A-80B), les moyens élastiques (124) et/ou la paroi de maintien (22 ; 122) sont réalisés en un matériau conducteur thermiquement.

8. Module selon l'une quelconque des revendications précédentes, comprenant une seule paroi de référence (20A) constituée par la paroi inférieure ou la paroi supérieure de l'enveloppe.

9. Module selon l'une quelconque des revendications précédentes, dans lequel la paroi (120B) de l'enveloppe opposée à la paroi de référence (120A) est configurée de sorte que sa distance relativement à la paroi de référence varie localement, et présente notamment des ondulations (121).

10. Module selon l'une quelconque des revendications précédentes, comprenant une structure de calage (50; 150) des éléments de stockage (14 ; 114), réalisée en un matériau isolant électriquement et comprenant une pluralité de logements (52) pour accueillir les éléments de stockage d'énergie.

11. Module selon la revendication précédente, dans lequel la structure de calage (50 ; 150) comprend des moyens de positionnement (70 ; 170), notamment de fixation, relativement à la paroi de maintien (22 ; 122).

12. Module selon l'une quelconque des revendications 10 ou 11, dans lequel la structure de calage (50) comprend au moins l'un des moyens suivants :
- des moyens (58) de guidage de câbles (60), et/ou
- des moyens (56) pour loger un connecteur électrique apte à coopérer avec des moyens complémentaires (57) reliés aux éléments (14), et/ou
- des moyens (68) pour loger un connecteur à une carte électronique (62), et/ou
- des moyens (64) de fixation de la carte électronique (62), et/ou
- des moyens de fixation d'au moins un capteur.

13. Module selon l'une quelconque des revendications précédentes, dans lequel les éléments de stockage sont disposés côte à côte de sorte que chaque ensemble possède une première extrémité qui vient en butée contre la paroi de maintien et une deuxième extrémité qui vient en butée contre la paroi de l'enveloppe opposée à la paroi de référence.

14. Procédé d'assemblage d'un module (10; 100) de stockage d'énergie destiné à contenir une pluralité d'éléments de stockage d'énergie 14; 114 dans une enveloppe 16, comprenant les étapes suivantes :
- placement d'une paroi de maintien (22 ; 122) dans une pièce (20 ; 120) présentant un contour fermé et dimensionnée pour accueillir les éléments de stockage, la pièce formant une portion d'enveloppe 16 du module et comprenant au moins les parois latérales de l'enveloppe, de sorte que la paroi de maintien (22 ; 122) soit parallèle et adjacente à l'une des parois latérales, dite paroi latérale de référence (20A ; 120A), et que la paroi de maintien soit placée dans une position d'assemblage, à une première distance (D1) de la paroi de référence,
- insertion par glissement des éléments de stockage (14 ; 114) dans la pièce (20 ; 120), de sorte que les éléments une fois insérés soient en contact avec la paroi de maintien (22 ; 122),
- modification de la position de la paroi de maintien (22 ; 122) de sorte qu'elle passe de la position d'assemblage à une position de fonctionnement, dans laquelle elle est à une deuxième distance (D2) de la paroi de référence, supérieure à la première distance (D1), la position de fonctionnement étant choisie, de façon à plaquer au moins un organe en association avec les éléments de stockage contre une paroi (20B, 120B) de la pièce opposée à la paroi de référence (20A ; 120A),
l'étape de modification de la position de la paroi de maintien (22) comprenant une étape d'insertion d'au moins une cale, notamment un ou plusieurs longerons (24A- 24B ; 80A-80B), dans la pièce (20), entre la paroi de référence (20A) et la paroi de maintien (22), l'insertion étant effectuée par coopération de l'au moins une cale (24A-24B ; 80A-80B) avec au moins un rail de guidage (26A-26B) de la paroi de référence (20A).

15. Procédé selon la revendication 14, dans lequel l'étape de modification de la position de la paroi de maintien (22 ; 122) comprend une étape de libération de moyens élastiques (90 ; 124) précontraints.

16. Procédé selon la revendication 14 ou 15, dans lequel l'étape d'insertion des éléments de stockage (14 ; 114) dans la pièce (20 ; 120) comprend une étape d'insertion des éléments de stockage (14 ; 114) dans une structure de calage (50 ; 150) comprenant une pluralité de logements (52) aptes respectivement à accueillir au moins un élément de stockage et une étape de positionnement de la structure de calage contenant les éléments relativement à la paroi de maintien (22 ; 122).

17. Procédé selon la revendication précédente, comprenant, avant l'étape de positionnement de la structure (50) sur la paroi de maintien (22), notamment d'insertion des éléments (14) dans la structure de calage (50), une étape d'assemblage d'au moins un élément de connectique électronique, notamment au moins un câble (60), au moins une carte électronique (62), au moins un connecteur, au moins un capteur, sur la structure de calage(50).

## Patentansprüche

1. Energiespeichermodul (10; 100), das imstande ist, eine Vielzahl von Energiespeicherelementen (14; 114) zu enthalten, wobei das Modul umfasst:
- eine Hülle (16), die mindestens eine Vielzahl von Seitenwänden und zwei Endwände (18A; 18B) umfasst, wobei die Seitenwände in einem einzigen Teil (20; 120) hergestellt sind, das eine geschlossene Kontur aufweist und bemessen ist, um die Energiespeicherelemente zu umschließen,
- eine Haltewand (22; 122) der Energiespeicherelemente, die sich von den Wänden der Hülle unterscheidet und bestimmt ist, sich im Wesentlichen parallel zu einer der Seitenwände, als Referenzwand (20A; 120A) bezeichnet, zu erstrecken,
- Mittel (24A-24B; 80A-80B; 124-126), die imstande sind, die Position der Haltewand (22, 122) zwischen mindestens einer Montageposition, in welcher sie sich in einem ersten Abstand (D1) von der Referenzwand (20A, 120A) befindet, und einer Funktionsposition, in welcher sie sich in einem zweiten Abstand (D2) von der Referenzwand (20A, 120A) befindet, der größer als der erste Abstand (D1) ist, zu verändern,
wobei die Mittel zur Veränderung der Position der Haltewand mindestens einen Keil (24A-24B; 80A-80B) umfassen, der bestimmt ist, zwischen der Referenzwand (20A) und der Haltewand (22) eingesetzt zu sein, wobei der Keil vor allem die Form eines Längsbalkens hat,
wobei die Referenzwand (20A) mindestens eine Führungsschiene (26A-26B) umfasst, die imstande ist, mit dem oder mindestens einem der Keile (24A-24B; 80A-80B) zusammenzuwirken.

2. Modul nach vorangehendem Anspruch, wobei das Teil (20), das die Seitenwände umfasst, an seinen beiden Enden offen ist, wobei das Modul ferner zwei Endwände (18A-18B) umfasst, wobei jede Wand jeweils von dem Teil unabhängig ist und imstande, dieses an einem offenen Ende zu verschließen.

3. Modul nach einem der Ansprüche 1 oder 2, wobei der oder mindestens einer der Keile (80A-80B) konfiguriert ist, um mindestens gemäß der zur Referenzwand (20A), der er zugeordnet ist, normalen Richtung elastisch verformbar zu sein.

4. Modul nach einem der vorangehenden Ansprüche,
wobei die Mittel zur Veränderung der Position der Haltewand ebenfalls elastische Mittel (90; 124) und Mittel (92; 126), um die elastischen Mittel in einer Spannungsposition zu halten, umfassen können.

5. Modul nach den Ansprüchen 3 und 4 in Kombination, wobei die elastischen Mittel (90) mit dem oder mindestens einem der Keile (80A- 80B) zusammenhängend sind.

6. Modul nach einem der vorangehenden Ansprüche, umfassend mindestens ein Organ (28), das aus einem komprimierbaren Material hergestellt ist, das bestimmt ist, zwischen der Haltewand (22) und den Speicherelementen (14) und/oder zwischen den Speicherelementen und einer Seitenwand der Hülle (16), die der Referenzwand gegenüberliegt, platziert zu sein.

7. Modul nach einem der vorangehenden Ansprüche,
wobei der oder mindestens einer der Keile (24A-24B; 80A-80B), die elastischen Mittel (124) und/oder die Haltewand (22; 122) aus einem thermisch leitenden Material hergestellt sind.

8. Modul nach einem der vorangehenden Ansprüche, umfassend eine einzige Referenzwand (20A), die von der unteren Wand oder der oberen Wand der Hülle gebildet ist.

9. Modul nach einem der vorangehenden Ansprüche,
wobei die Wand (120B) der Hülle, die der Referenzwand (120A) gegenüberliegt, derart konfiguriert ist, dass ihr relativer Abstand zur Referenzwand lokal schwankt und insbesondere Wellen (121) aufweist.

10. Modul nach einem der vorangehenden Ansprüche, umfassend eine Verkeilungsstruktur (50; 150) der Speicherelemente (14; 114), hergestellt aus einem elektrisch isolierenden Material und umfassend eine Vielzahl von Aufnahmen (52) zum Aufnehmen der Energiespeicherelemente.

11. Modul nach vorangehendem Anspruch, wobei die Verkeilungsstruktur (50; 150) Positionierungs-, insbesondere Fixierungsmittel (70; 170) relativ zur Haltewand (22; 122) umfasst.

12. Modul nach einem der Ansprüche 10 oder 11,
wobei die Verkeilungsstruktur (50) mindestens eines der folgenden Mittel umfasst:
- Führungsmittel (58) von Kabeln (60), und/oder
- Mittel (56) zur Unterbringung eines elektrischen Verbinders, der imstande ist, mit komplementären Mitteln (57) zusammenzuwirken, die mit den Elementen (14) verbunden sind, und/oder
- Mittel (68), um einen Verbinder auf einer elektronischen Karte (62) zu platzieren, und/oder
- Befestigungsmittel (64) der elektronischen Karte (62), und/oder
- Befestigungsmittel mindestens eines Sensors.

13. Modul nach einem der vorangehenden Ansprüche,
wobei die Speicherelemente nebeneinander angeordnet sind, so dass jede Gruppe ein erstes Ende besitzt, das an der Haltewand anschlägt, und ein zweites Ende, das an der Wand der Hülle anschlägt, die der Referenzwand gegenüberliegt.

14. Montageverfahren eines Energiespeichermoduls (10; 100), das bestimmt ist, eine Vielzahl von Energiespeicherelementen 14; 114 in einer Hülle 16 zu enthalten, das die folgenden Schritte umfasst:
- Platzieren einer Haltewand (22; 122) in einem Teil (20; 120), das eine geschlossene Kontur aufweist und bemessen ist, um die Speicherelemente aufzunehmen, wobei der Teil einen Abschnitt der Hülle 16 des Moduls bildet und mindestens die Seitenwände der Hülle umfasst, so dass die Haltewand (22; 122) zu einer der Seitenwände, die als Referenz-Seitenwand (20A; 120A) bezeichnet wird, parallel und benachbart ist, und die Haltewand in einer Montageposition in einem ersten Abstand (D1) von der Referenzwand platziert ist,
- Einsetzen durch Gleiten der Speicherelemente (14; 114) in das Teil (20; 120), so dass die Elemente, sobald sie eingesetzt sind, mit der Haltewand (22; 122) im Kontakt sind,
- Verändern der Position der Haltewand (22; 122), so dass sie von der Montageposition in eine Funktionsposition wechselt, in welcher sie sich in einem zweiten Abstand (D2) von der Referenzwand befindet, der größer als der erste Abstand (D1) ist, wobei die Funktionsposition derart ausgewählt ist, dass mindestens ein Organe in Zuordnung zu den Speicherelementen gegen eine Wand (20B, 120B) des Teils gedrückt wird, die der Referenzwand (20A; 120A) gegenüberliegt,
wobei der Änderungsschritt der Position der Haltewand (22) einen Einsetzschritt mindestens eines Keils, insbesondere eines oder mehrerer Längsbalken (24A-24B; 80A-80B), in das Teil (20) zwischen die Referenzwand (20A) und die Haltewand (22) umfasst, wobei das Einsetzen durch Zusammenwirken mindestens eines Keils (24A-24B; 80A-80B) mit mindestens einer Führungsschiene (26A-26B) der Referenzwand (20A) erfolgt.

15. Verfahren nach dem Anspruch 14, wobei der Änderungsschritt der Position der Haltewand (22; 122) einen Freigabeschritt vorgespannter elastischer Mittel (90; 124) umfasst.

16. Verfahren nach einem der Ansprüche 14 oder 15,
wobei der Einsetzschritt der Speicherelemente (14; 114) in das Teil (20; 120) einen Einsetzschritt der Speicherelemente (14; 114) in eine Verkeilungsstruktur (50; 150), die eine Vielzahl von Aufnahmen (52) umfasst, die jeweils imstande sind, mindestens ein Speicherelement aufzunehmen, und einen Positionierungsschritt der Verkeilungsstruktur, welche die Elemente enthält, relativ zur Haltewand (22; 122) umfasst.

17. Verfahren nach vorangehendem Anspruch, das vor dem Positionierungsschritt der Struktur (50) auf der Haltewand (22), insbesondere dem Einsetzschritt der Elemente (14) in die Verkeilungsstruktur (50), einen Montageschritt mindestens eines elektronischen Verbindungselements, insbesondere mindestens eines Kabels (60), mindestens einer elektronischen Karte (62), mindestens eines Verbinders, mindestens eines Sensors, auf der Verkeilungsstruktur(50) umfasst.

## Claims

1. An energy storage module (10; 100) suitable for containing a plurality of energy storage elements (14; 114), the module comprising:
- an envelope (16) comprising at least a plurality of lateral walls and two end walls (18A; 18B), the lateral walls being made in a single piece (20; 120) having a closed outline and sized to enclose the energy storage elements,
- a supporting wall (22; 122) of energy storage elements separate from the walls of the envelope, and intended to extend essentially parallel to one of the lateral walls, called a reference wall (20A; 120A),
- means (24A-24B; 80A-80B; 124-126) suitable for modifying the position of the supporting wall (22, 122) between at least one assembly position, wherein the supporting wall is at a first distance (D1) from the reference wall (20A, 120A) and an operating position, wherein the supporting wall is at a second distance (D2) from the reference wall (20A, 120A), greater than the first distance (D1),
the means for modifying the position of the supporting wall comprising at least one shim (24A-24B; 80A-80B) intended to be inserted between the reference wall (20A) and the supporting wall (22), the shim especially having the form of a longitudinal member,
the reference wall (20A) comprising at least one guide rail (26A-26B) capable of cooperating with the or at least one of the shims (24A-24B; 80A-80B).

2. The module according to the preceding claim, wherein the piece (20) comprising the lateral walls is open at its two ends, the module further comprising two end walls (18A-18B), each wall being independent respectively of the piece and capable of closing the latter at an open end.

3. The module according to any one of Claims 1 or 2, wherein the or at least one of the shims (80A-80B) is configured to be able to deform elastically at least according to the direction normal to the reference wall (20A) to which the or at least one of the shims is connected.

4. The module according to any one of the preceding claims, wherein the means for modifying the position of the supporting wall can also comprise elastic means (90; 124) and means (92; 126) for holding the elastic means in a stressed position.

5. The module according to Claims 3 and 4 in combination, wherein the elastic means (90) are in a single piece with the or at least one of the shims (80A-80B).

6. The module according to any one of the preceding claims, comprising at least one member (28) made of compressible material intended to be placed between the supporting wall (22) and the storage elements (14) and/or between the storage elements and a lateral wall of the envelope (16) opposite the reference wall.

7. The module according to any one of the preceding claims, wherein the or at least one of the shims (24A-24B; 80A-80B), the elastic means (124) and/or the supporting wall (22; 122) are made of thermally conductive material.

8. The module according to any one of the preceding claims, comprising a single reference wall (20A) formed by the lower wall or the upper wall of the envelope.

9. The module according to any one of the preceding claims, wherein the wall (120B) of the envelope opposite the reference wall (120A) is configured such that its distance relative to the reference wall varies locally, and especially has undulations (121).

10. The module according to any one of the preceding claims, comprising a shimming structure (50; 150) of storage elements (14; 114), made of electrically insulating material and comprising a plurality of housings (52) to receive the energy storage elements.

11. The module according to the preceding claim, wherein the shimming structure (50; 150) comprises positioning means (70; 170), especially attachment, relative to the supporting wall (22; 122).

12. The module according to any one of Claims 10 or 11, wherein the shimming structure (50) comprises at least one of the following means:
- guide means (58) for cables (60), and/or
- means (56) for housing an electric connector capable of cooperating with complementary means (57) connected to the elements (14), and/or
- means (68) for housing a connector to an electronic card (62), and/or
- attachment means (64) of the electronic card (62), and/or
- attachment means of at least one sensor.

13. The module according to any one of the preceding claims, wherein the storage elements are arranged side by side such that each assembly has a first end stopping against the supporting wall and a second end stopping against the wall of the envelope opposite the reference wall.

14. An assembly method of an energy storage module (10; 100) intended to contain a plurality of energy storage elements (14; 114) in an envelope (16), comprising the following steps:
- placement of a supporting wall (22; 122) in a piece (20; 120) having a closed outline and sized to receive the storage elements, the piece forming a portion of an envelope (16) of the module and comprising at least the lateral walls of the envelope, such that the supporting wall (22; 122) is parallel and adjacent to one of the lateral walls, called a parallel reference wall (20A; 120A), and the supporting wall is placed in an assembly position, at a first distance (D1)from the reference wall,
- insertion by sliding the storage elements (14; 114) into the piece (20; 120), such that once inserted the elements are in contact with the supporting wall (22; 122),
- modification of the position of the supporting wall (22; 122) such that the supporting wall moves from the assembly position to an operating position, wherein the supporting wall is at a second distance (D2) from the reference wall, greater than the first distance (D1), the operating position being selected so as to press at least one member in association with the storage elements against a wall (20B, 120B) of the piece opposite the reference wall (20A; 120A),
the modification step of the position of the supporting wall (22) comprising an insertion step of at least one shim, especially one or more longitudinal members (24A-24B; 80A-80B), into the piece (20), between the reference wall (20A) and the supporting wall (22), insertion being carried out in cooperation with the at least one shim (24A-24B; 80A-80B) with at least one guide rail (26A-26B) of the reference wall (20A).

15. The method according to Claim 14, wherein the modification step of the position of the supporting wall (22; 122) comprises a release step of pre-stressed elastic means (90; 124).

16. The method according to Claim 14 or 15, wherein the insertion step of the storage elements (14; 114) into the piece (20; 120) comprises an insertion step of the storage elements (14; 114) in a shimming structure (50; 150) comprising a plurality of housings (52) capable respectively of receiving at least one storage element and a positioning step of the shimming structure containing the elements relative to the supporting wall (22; 122).

17. The method according to Claim 16, comprising, prior to the positioning step of the structure (50) on the supporting wall (22), especially insertion of the elements (14) in the shimming structure (50), an assembly step of at least one electronic connector element, especially at least one cable (60), at least one electronic card (62), at least one connector, at least one sensor, on the shimming structure (50).
